# EUROPEAN PATENT APPLICATION

(11) **EP 4 029 414 A2**
(43) Date of publication of application: **20.07.2022**
(21) Application number: 20863208.3
(22) Date of filing: 02.09.2020
(51) Int. Cl.: A47J 19/06, A47J 19/02, A23N 1/02

(54) **FOOD COOKER**

(30) Priority: 11.09.2019 KR 20190112717
(71) Applicant: NUC Electronics Co., Ltd., Daegu 41548 (KR)
(72) Inventor: KIM, Jong Boo, Daegu 41573 (KR)
(74) Representative: Michalski Hüttermann & Partner Patentanwälte mbB
(86) International application number: PCT/KR2020/011759
(87) International publication number: WO 2021/049807

(57) **Abstract**

A food cooker according to an embodiment of the present invention comprises: a screw with crushing blades; a container that rotatably accommodates the base end of the screw; and a material guide part that is formed to extend upward from the container and includes a material input port, into which food ingredients are introduced, provided at the upper end thereof so as to guide the food ingredients, introduced through the material input port, into the container, wherein the material guide part is eccentrically disposed with respect to the container, such that one side of the material guide part is in contact with the upper side of the container, the other side of the material guide part is in contact with the side and lower sides of the container, and the lower end of the inner surface of the other side of the material guide part is formed to be deflected toward the tip of the screw.

## Description

### Technical Field

The disclosure relates to a food processor, and more particularly to a food processor for extracting juice from a food ingredient.

### Background Art

There have been used various food processors such as a blender, a juicer for green vegetable juice, a slow juicer, and the like for crushing, mixing, juicing, etc. foods.

In particular, the juicer for green vegetable juice and the slow juicer extract juice from a food ingredient by crushing, pressing and squeezing the food ingredient at low speed.

However, in the case of an apple and the like food ingredients having a relatively large diameter or volume, the juicer for green vegetable juice or the slow juicer is inconvenient for a user because such a food ingredient needs to be cut into small pieces in advance before s/he puts it into the juicer.

Although the food ingredient can be put into the juicer as it is without being cut into small pieces, the food ingredient is often not crushed because it cannot get in between a screw and a container.

### Documents of Related Art]

### Patent Document 1]

(Patent Document 1) Korean Patent Publication No. 10-2005-0100273 (October 18, 2005)

### Technical Problem

An aspect of the disclosure is to provide a food processor improved in efficiency of juice extraction.

The aspects of the disclosure are not limited to the foregoing aspect, and other aspects not mentioned above will become apparent to those skilled in the art from the following descriptions.

### Technical Solution

According to the aspect of the disclosure, there may be provided a food processor including: a screw formed with a crushing blade; a container in which a base end side of the screw is rotatably accommodated; and an ingredient guider extended upward from the container, and including an ingredient inlet on a top thereof to feed a food ingredient, so that the food ingredient fed through the ingredient inlet can be guided into the container, wherein the ingredient guider is eccentrically disposed with respect to the container, and includes a first side being in contact with an upper side of the container and a second side being in contact with a lateral portion and a lower side of the container, and the second side of the ingredient guider includes a bottom side of an inner surface thereof biased toward a tip end side of the screw.

The inner surface of the second side of the ingredient guider includes an outer line formed by connecting outermost points of horizontal planes, and the outer line includes an upper line extended vertically downward, and a lower line inclined with regard to the upper line from a lower portion of the upper line toward a tip end of the screw.

An edge line forming a boundary between the container and the inner surface of the second side of the ingredient guider may include a first edge line adjacent to the tip end of the screw with respect to the lower line, and a second edge line adjacent to the base end of the screw with respect to the lower line, and the first edge line is more steeply inclined with regard to a rotary shaft of the screw than the second edge line.

The first side of the ingredient guider may be extended upward at a position spaced apart from a center of the container in a direction of the first side.

The container may include at least one crusher protruding or recessed on an inner wall thereof.

At least some crushers may include a projection protruding against a rotating direction of the screw.

The screw may include an ingredient accommodating groove at a first side thereof, in which a food ingredient entering the container through the ingredient guide is at least partially accommodated.

The food processor may further include: a filter cover rotatably accommodating the tip end side of the screw and detachably coupled to the container; and a juice-extraction filter provided between the filter cover and the screw.

The juice-extraction filter may include: an inner filter provided to surround the tip end side of the screw and including a plurality of slits; and an outer filter detachably coupled to the inner filter to surround the inner filter, and including a plurality of plugs accommodated in the plurality of slits and forming a micro-gap together with the plurality of slits while coupling with the inner filter, and juice extracted from a food ingredient pressed between the tip end side of the screw and the inner filter is discharged between the outer filter and the filter cover through the micro-gap.

A bottom surface of the container may be formed with a juice outlet through which juice discharged between the outer filter and the filter cover is drained, and the filter cover may include a downward surface inclined toward the container so that juice can flow toward the juice outlet.

The food processor may further include a discharge-preventing piece provided above the juice outlet so that a food ingredient put into the container or a food ingredient byproduct produced while extracting juice from the food ingredient can be prevented from being directly discharged through the juice outlet without passing through the juice-extraction filter.

The discharge-preventing piece may be extended from a first side of the inner filter.

The inner filter may include a first residue outlet through which residues remaining after extracting juice from a food ingredient between the tip end side of the screw and the inner filter are discharged, and the residue remaining after extracting the juice from the food ingredient may be discharged between the first residue outlet and the tip end of the screw.

The food processor may further include a juice-discharging preventor interposed between the first residue outlet and the tip end of the screw and preventing juice extracted from the food ingredient from being discharged through the first residue outlet, wherein the juice-discharging preventor is elastically transformable in a portion thereof adjacent to the tip end of the screw, so that residues remaining after extracting juice from the food ingredient can be discharged while elastically transforming the portion adjacent to the tip end of the screw by extrusion force based on the rotation of the screw.

The filter cover may include a second residue outlet communicating with the first residue outlet, and the juice-discharging preventor may be positioned between the first residue outlet and the second residue outlet.

Other details of the disclosure are included in the detailed description and the accompanying drawings.

### Advantageous Effects

According to embodiments of the disclosure, effects are at least as follows.

There is provided a food processor which is structurally stable including an ingredient inlet large enough to feed a food ingredient having a large diameter without cutting in advance.

Further, there is provided a food processor, in which a food ingredient is smoothly introduced between a screw and a container, and thus more rapidly and effectively crushed.

Further, there is provided a food processor, in which juice is prevented from being discharged through a residue outlet, and residues are prevented from being discharged through a juice outlet, thereby improving a juicing efficiency.

The effects according to the disclosure are not limited to the foregoing example, and more various effects are involved in the present specification.

### Description of Drawings

FIG. 1 is a perspective view showing a part of a food processor according to an embodiment of the disclosure.
FIG. 2 is an exploded perspective view of the food processor shown in FIG. 1.
FIG. 3 is a lateral view of the food processor shown in FIG. 1.
FIG. 4 is a longitudinal-section view of a coupled state between a container and a filter cover in a food processor according to an embodiment of the disclosure.
FIG. 5 is a longitudinal-section view of a container in a food processor according to an embodiment of the disclosure, viewed from a different angle.
FIG. 6 is a perspective view showing a screw of a food processor according to an embodiment of the disclosure.
FIG. 7 is a cut-open view of a coupled state among a container, a screw and a filter cover in a food processor according to an embodiment of the disclosure.
FIG. 8 is a perspective view showing an inner filter of a food processor according to an embodiment of the disclosure.
FIG. 9 is a perspective view showing an outer filter according to a food processor according to an embodiment of the disclosure.
FIG. 10 is a perspective view showing a state that an inner filter and an outer filter are being assembled in a food processor according to an embodiment of the disclosure.
FIG. 11 is a longitudinal-section view showing an assembled state of an inner filter and an outer filter in a food processor according to an embodiment of the disclosure.
FIG. 12 is a cut-open view of the food processor of FIG. 1.

### Mode for Invention

The merits and characteristics of the disclosure and a method for achieving the merits and characteristics will become more apparent from embodiments described below in detail in conjunction with the accompanying drawings. However, the disclosure is not limited to the disclosed embodiments, but may be implemented in various different ways. The embodiments are provided to only complete the disclosure and to allow those skilled in the art to understand the category of the disclosure. The disclosure is defined by the category of the claims. Like numerals refer to like elements throughout.

Further, embodiments of the disclosure will be described with reference to cross-sectional views and/or schematic views as idealized exemplary illustrations. Therefore, the illustrations may be varied in shape depending on manufacturing techniques, tolerance, and/or etc. Further, elements in the drawings may be relatively enlarged or reduced for convenience of description. Like numerals refer to like elements throughout.

Below, the disclosure will be described with reference to the accompanying drawings that illustrates a food processor according to the embodiments of the disclosure.

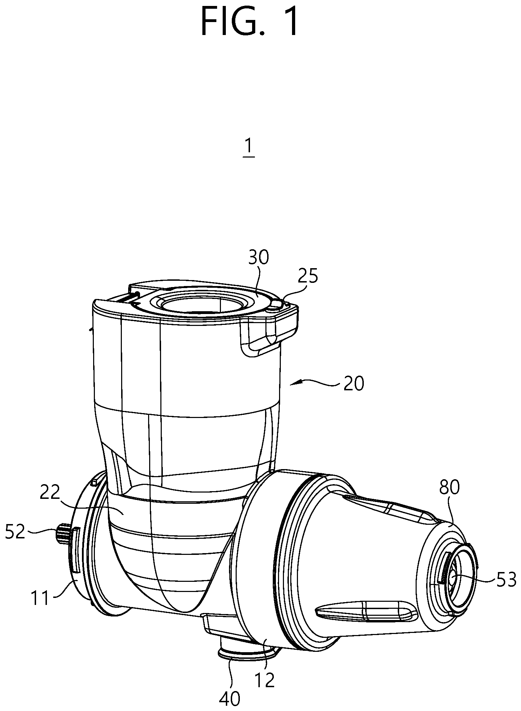

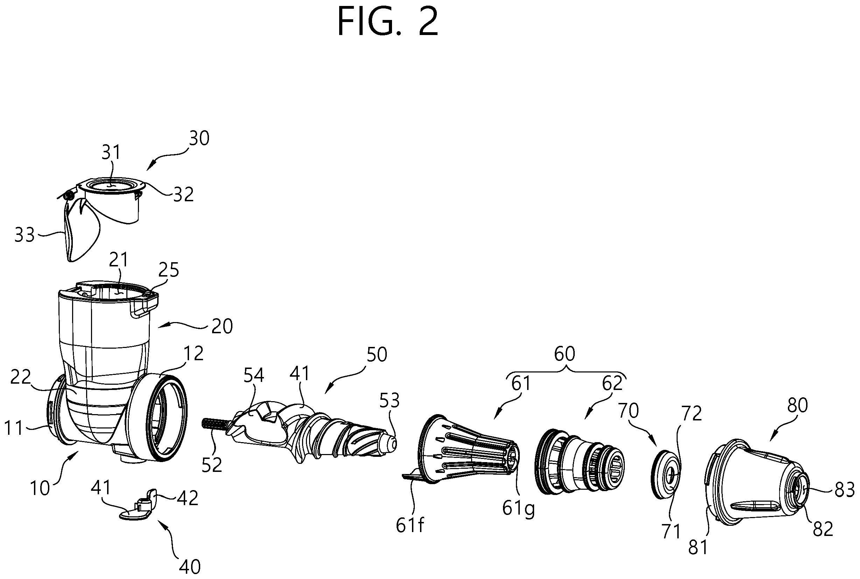

FIG. 1 is a perspective view showing a part of a food processor according to an embodiment of the disclosure, and FIG. 2 is an exploded perspective view of the food processor shown in FIG. 1.

As shown in FIG. 1 and 2, the food processor 1 according to an embodiment of the disclosure includes a container 10 formed with an ingredient guider 20, a screw 50, a juice-extraction filter 60, a juice-discharging preventor 70, and a filter cover 80.

The ingredient guider 20 may further include a safety cover 30.

The safety cover 30 may be placed in an ingredient inlet 21 formed at the top of the ingredient guider 20. The safety cover 30 includes a first portion 32 formed with an ingredient inlet 31, and a second portion 33 extended from the first portion 32 in an approximately vertical direction.

The safety cover 30 may be rotatably provided on the top of the ingredient guider 20, and may, as shown in FIG. 1, be elastically supported with respect to a rotary shaft so as to maintain a state that the ingredient inlet 31 of the safety cover 30 is positioned on the top of the ingredient guider 20 as the first portion 32 covers the ingredient inlet 21. In the state shown in FIG. 1, a user can feed a food ingredient through the ingredient inlet 31 of the safety cover 30.

Meanwhile, when a food ingredient has a larger diameter than the ingredient inlet 31 of the safety cover 30, a user may turn the safety cover 30 (in a counterclockwise direction with respect to FIG. 1) to expose the ingredient inlet 21 of the ingredient guider 20, and then feed the food ingredient through the ingredient inlet 21 of the ingredient guider 20.

As a user turns the safety cover 30 and thus the first portion 32 moves up, the second portion 33 also moves up and blocks an inside of the ingredient guider 20 (i.e., a moving path of the food ingredient, which is vertically extended downward from the ingredient inlet 21). Therefore, the second portion 33 prevents a user's hand or the like from entering the inside of the ingredient guider 20 and entering up to the screw 50 (to be described later) even though the ingredient inlet 21 of the ingredient guider 20, which has a relatively large diameter, is exposed, thereby preventing accidents.

As shown in FIGS. 1 and 2, a lock switch 25 for locking the safety cover 30 may be provided at the top of the ingredient guider 20.

The ingredient guider 20 is shaped like a cylinder extended downward in an approximately vertical direction, and the container 10 is shaped like a cylinder extended in an approximately horizontal direction, in which the ingredient guider 20 and the container 10 may be formed as a single body so that their inner sides can communicate with each other.

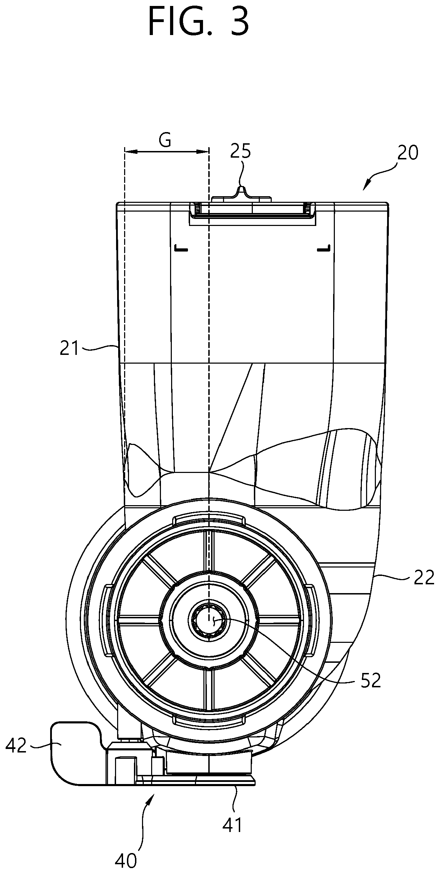

FIG. 3 is a lateral view of the food processor shown in FIG. 1.

As shown in FIG. 3, the ingredient guider 20 is asymmetrically provided with respect to the container 10.

In other words, the ingredient guider 20 is eccentrically disposed with respect to the container 10, and thus includes a first lateral surface 21 being in contact with an upper side of the container 10 and a second lateral surface 22 being in contact with a lateral portion and a lower side of the container 10.

As the ingredient guider 20 is extended upward from the container 10 and eccentrically disposed with regard to the container 10, a food ingredient falling down toward the container 10 along the ingredient guider 20 enters the container 10 eccentrically toward a second side of the container 10, so that the food ingredient can smoothly enter between the container 10 and the screw 50 rotating inside the container 10, thereby being crushed and pressed by the screw 50.

The eccentric direction of the ingredient guider 20 corresponds to a rotating direction of the screw 50. In other words, FIG. 3 illustrates that the ingredient guider 20 is eccentrically disposed rightward with respect to the container 10. In this case, the screw 50 may rotate clockwise. When a food ingredient eccentrically falls rightward with respect to the rotary shaft of the screw 50, the screw 50 rotates downward at a point where the food ingredient meets the screw 50. Therefore, the screw 50 can crush and move a food ingredient frontward (toward the juice-extraction filter 60) as soon as the food ingredient falls on the screw 50.

Alternatively, when the screw 50 rotates counterclockwise with respect to FIG. 3, the ingredient guider 20 may be eccentrically disposed leftward with respect to the container 10.

To maintain the structural stability of the food processor 1 with the ingredient inlet 21 of the ingredient guider 20, a diameter of which is large enough to feed a food ingredient having a large diameter (e.g., an apple, etc.) as it is without cutting even though the ingredient guider 20 is eccentrically disposed with respect to the container 10 and/or the rotary shaft of the screw 50, the first lateral surface 21 of the ingredient guider 20 may, as shown in FIG. 3, be extended upward at a position spaced apart by a distance G from the center of the container 10 and/or the rotary shaft of the screw 50 in a direction toward the first side (i.e., in a direction opposite to an eccentric direction).

If the first lateral surface 21 of the ingredient guider 20 is extended upward directly above the center of the container 10 and/or the rotary shaft of the screw 50 or extended upward at a position spaced apart from the center of the container 10 and/or the rotary shaft of the screw 50 in the eccentric direction, the ingredient guider 20 is considerably spaced apart from the center of the container 10 and therefore the food processor 1 may overturn when a heavy food ingredient is fed through the ingredient guider 20 or there may be inconvenience in that a user has to previously cut and then feed a food ingredient having a large diameter (e.g., an apple, etc.) because the food ingredient does not enter as it is when the ingredient guider 20 is reduced in size to lower an overturning risk of the food processor 1.

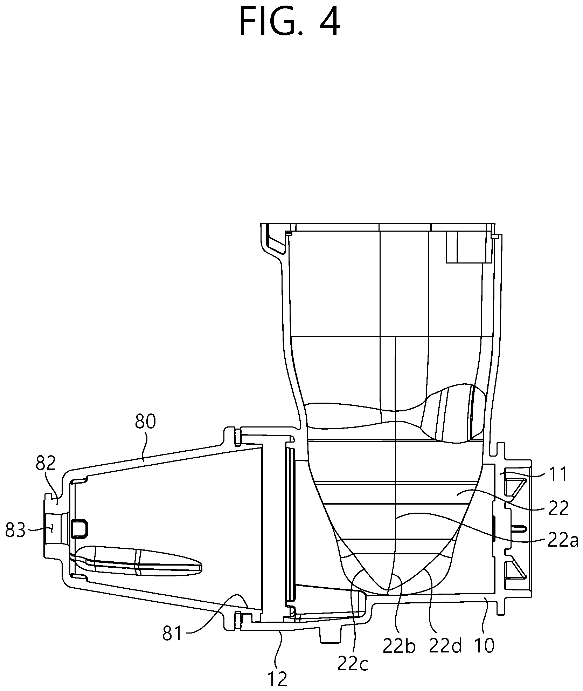

FIG. 4 is a longitudinal-section view of a coupled state between a container and a filter cover in a food processor according to an embodiment of the disclosure.

As shown in FIG. 4, a bottom side of an inner surface of the second lateral surface 22 of the ingredient guider 20 is biased toward a tip end of the screw 50 (i.e., toward the filter cover 80).

In more detail, the inner surface of the second lateral surface 22 of the ingredient guider 20 has an outer line 22a, 22b formed by connecting the outermost points of horizontal planes, in which the outer line 22a, 22b includes an upper line 22a extended vertically downward, and a lower line 22b inclined with regard to the upper line 22a from a lower portion of the upper line 22a toward the tip end of the screw 50.

Further, an edge line 22c, 22d forming a boundary between the container 10 and the bottom side of the inner surface of the second lateral surface 22 of the ingredient guider 20 includes a first edge line 22c close to the tip end of the screw 50 with respect to the lower line 22b, and a second edge line 22d close to a base end of the screw 50. As shown in FIG. 4, the first edge line 22c is more steeply inclined with regard to the rotary shaft of the screw 50 or the horizontal plane than the second edge line 22d.

In the food processor 1 according to an embodiment, the screw 50 crushes and presses a fed food ingredient and moves the food ingredient toward the tip end of the screw 50, in which the flow of the food ingredient guided or crushed and compressed between the screw 50 and the inner surface of the second lateral surface 22 of the ingredient guider 20 is naturally guided toward the tip end of the screw 50 by the foregoing shape of the inner surface of the second lateral surface 22 of the ingredient guider 20.

With the foregoing characteristic shape of the ingredient guider 20 relative to the container 10, the food processor 1 according to an embodiment can more quickly and efficiently extract juice from a food ingredient, and a user does not need to push a food ingredient with a separate push bar through the ingredient inlet 21 of the ingredient guider 20 in order to guide the food ingredient toward the screw 50, thereby preventing accidents that the food processor 1 is broken as the push bar gets caught in the screw 50 while the push bar is used, the food processor 1 overturns while the food ingredient is pressed with the push bar, etc.

Meanwhile, the container 10 includes a base 11 and a coupling end 12 at opposite ends thereof, in which the base 11 rotatably supports a screw rotation gear 52 forming the base end of the screw 50, and the coupling end 12 detachably couples with the filter cover 80.

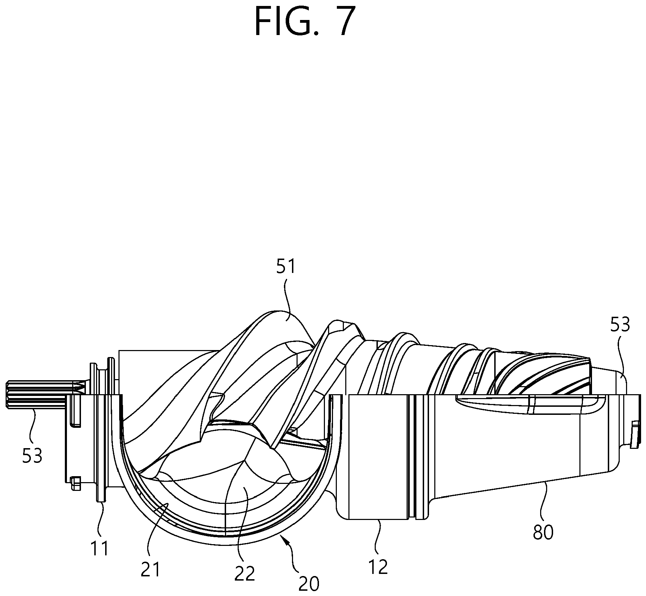

The end portion of the screw rotation gear 52 is exposed to the outside of the base 11 (see FIG. 7). The base 11 is coupled to a main body (not shown), and the main body is provided with a motor that provides power to rotate the screw 50. The end portion of the screw rotation gear 52, which is exposed to the outside of the base 11, may couple with the output shaft of the motor as the base 11 is coupled to the main body.

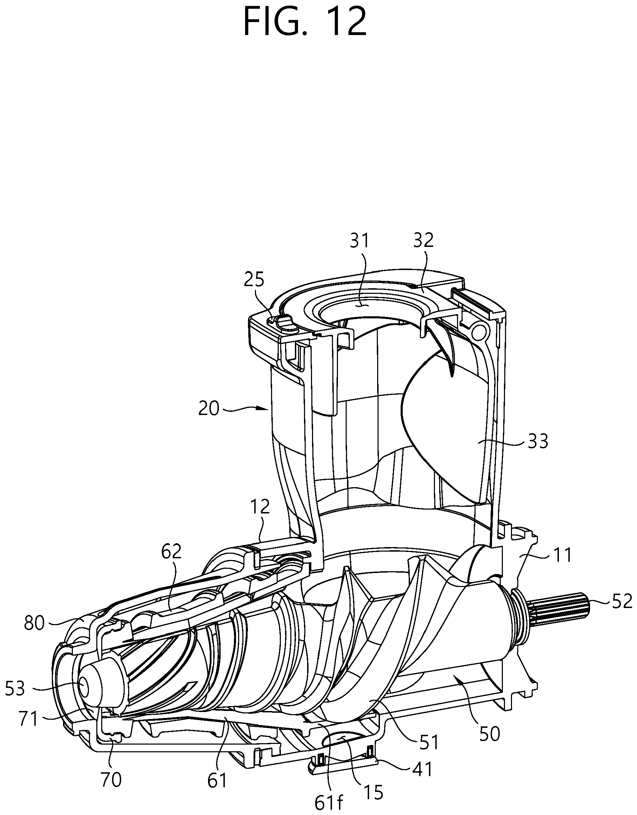

On the bottom surface of the container 10, a juice outlet 15 is formed to penetrate the container 10 at a position adjacent to the coupling end 12 in a downward direction (see FIG. 12).

A juice outlet opening/closing portion 40 is provided on the bottom of the container 10 to open and close the juice outlet 15. As shown in FIGS. 2 and 3, the juice outlet opening/closing portion 40 is provided to turn in a horizontal direction with respect to the container 10, and includes an opening/closing plate 41 for opening and closing the juice outlet 15, and a handle 42 for controlling the opening/closing operations of the opening/closing plate 41.

According to an alternative embodiment, the opening/closing direction of the juice outlet opening/closing portion 40 relative to the container 10 may be various designed. For example, the juice outlet opening/closing portion 40 may be structured to open and close the juice outlet 15 while moving or rotating in a direction perpendicular to the container 10, or may be based on a ball-type locking method.

The container 10 accommodates the base end of the screw 50 therein, and the tip end of the screw 50 is exposed to the outside through the coupling end 12 (see FIG. 7). While the screw 50 is rotating, a food ingredient guided into the container 10 is crushed and pressed between the screw 50 and the inner wall of the container 10.

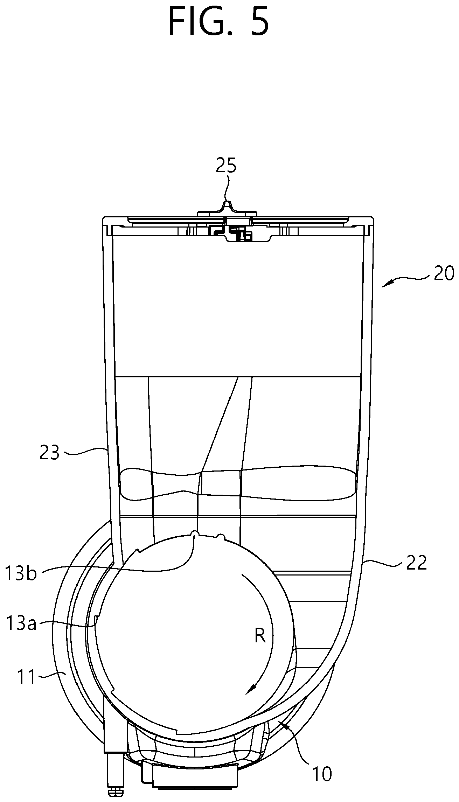

FIG. 5 is a longitudinal-section view of a container in a food processor according to an embodiment of the disclosure, viewed from a different angle.

As shown in FIG. 5, a plurality of crushers 13a and 13b may be formed on the inner wall of the container 10. The crushers 13a and 13b may include a projection 13a protruding against a rotating direction R of the screw 50, and a recess 13b recessed inward on the inner wall. Each of the crushers 13a and 13b may be extended in a direction approximately parallel with the rotary shaft of the screw 50.

The crushers 13a and 13b crush a food ingredient moved by the screw 50 and pressed against the inner wall of the container 10, thereby improving a crushing and juicing efficiency.

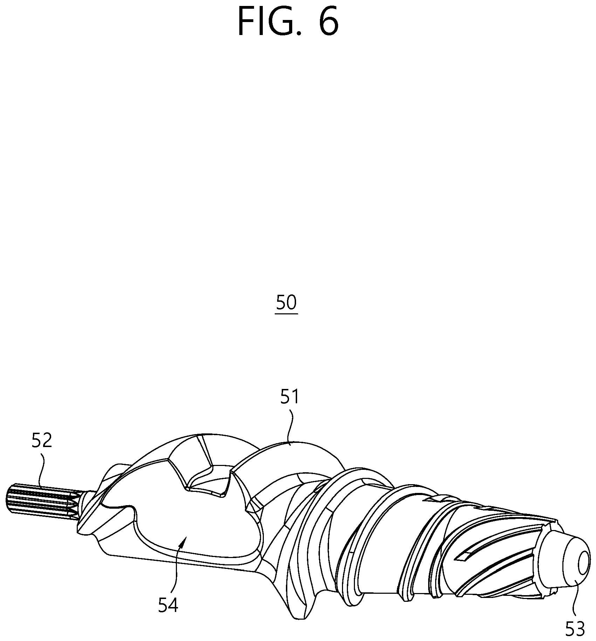

FIG. 6 is a perspective view showing a screw of a food processor according to an embodiment of the disclosure, and FIG. 7 is a cut-open view of a coupled state among a container, a screw and a filter cover in a food processor according to an embodiment of the disclosure.

As shown in FIGS. 6 and 7, the screw 50 includes a crushing blade 51, the screw rotation gear 52, a tip end projection 53, and an ingredient accommodating groove 54.

The crushing blade 51 turns along an outer circumference and is extended from the base end (i.e., the screw rotation gear 52) toward the tip end (i.e., the tip end projection 53). One or more crushing blades 51 may be provided.

The protruding height of the crushing blade 51 may decrease from the base end toward the tip end, and the diameter of the screw 50 may also become smaller from the base end toward the tip end.

This is because the shapes of the juice-extraction filter 60 and the filter cover 80 (to be described later) have to form a downward incline toward the container 10.

Further, the crushing blades 51 may be formed more densely at a tip end side than a base end side (so that gaps between the crushing blades 51 can become narrower at the tip end side). This is because a food ingredient is mainly crushed between the screw 50 and the container 10 at the base end side of the screw 50, but mainly juiced between the screw 50 and the juice-extraction filter 60 at the tip end side of the screw 50.

As shown in FIG. 7, the screw rotation gear 52, i.e., the base end of the screw 50 is rotatably supported on the base 11 of the container 10, and the tip end projection 53, i.e., the tip end of the screw 50 is rotatably supported on the filter cover 80 coupled to the container 10. For the smooth rotation of the screw 50, the tip end projection 53 may have a smooth external surface without the crushing blades 51.

The ingredient accommodating groove 54 is formed at the base end side of the screw 50, in more detail, in a portion of the screw 50 accommodated in the container 10 and positioned vertically below the ingredient inlet 21 of the ingredient guider 20.

The ingredient accommodating groove 54 may be shaped corresponding to an average external appearance of a food ingredient, for example, an apple, which has a relatively large diameter and frequently fed by a user, among the food ingredients fed through the ingredient guider 20.

When a user puts a food ingredient having a relatively large diameter into the container 10 through the ingredient guider 20, at least a part of the food ingredient is accommodated in the ingredient accommodating groove 54 while the screw 50 is rotating, and the food ingredient is crushed by the crushing blades 51 or between the screw 50 and the inner wall of the container 10 as the screw 50 rotates in the partially accommodated state of the food ingredient.

In other words, the ingredient accommodating groove 54 formed in the screw 50 makes the food ingredient be more rapidly crushed by the crushing blades 51 of the screw 50 or introduced, crushed and pressed between the screw 50 and the inner wall of the container 10.

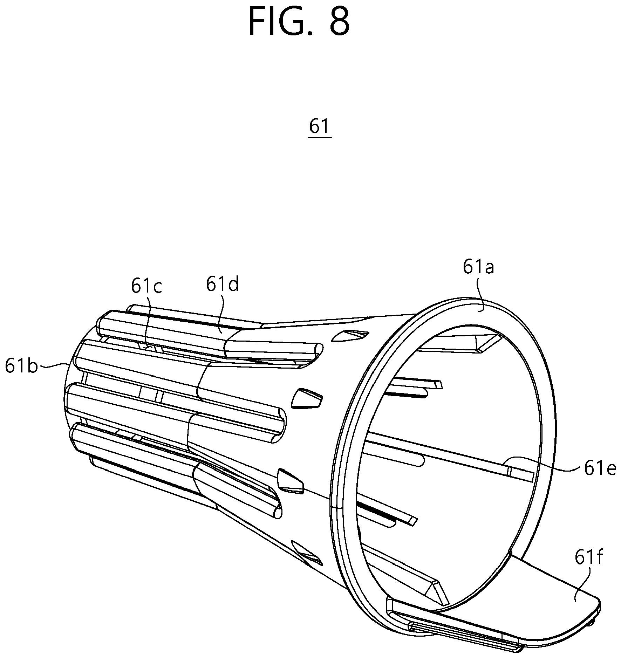

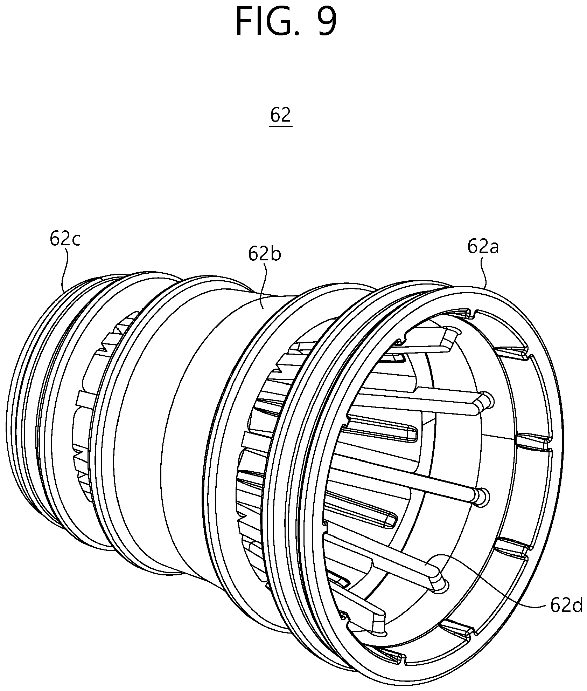

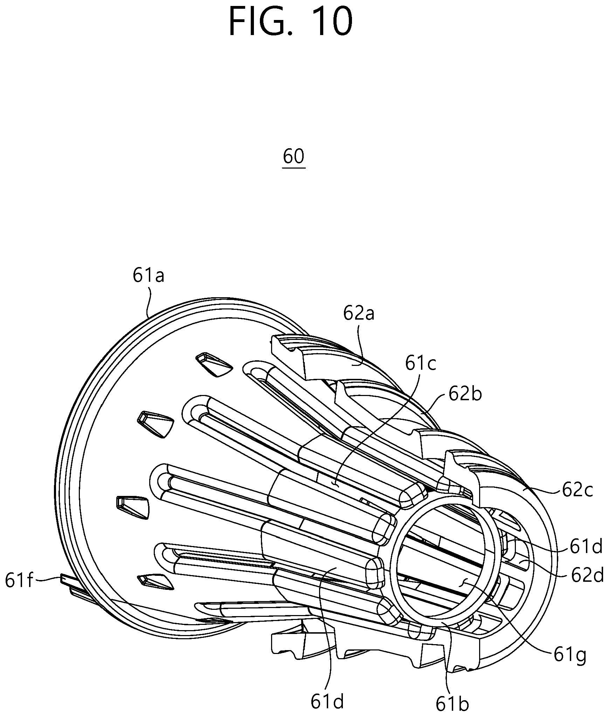

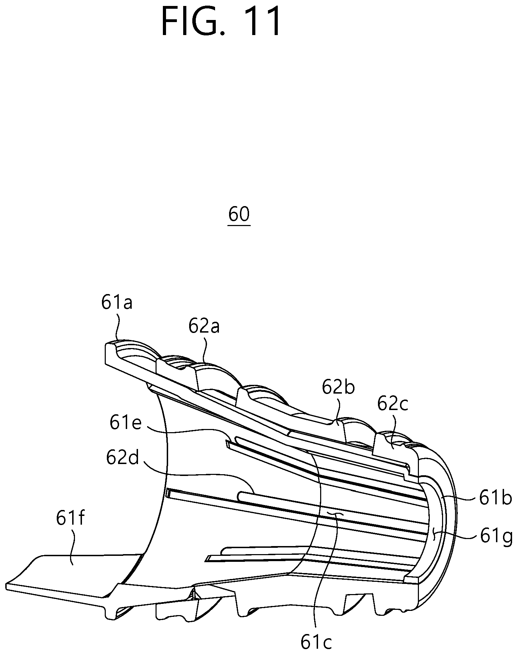

FIG. 8 is a perspective view showing an inner filter of a food processor according to an embodiment of the disclosure, FIG. 9 is a perspective view showing an outer filter according to the food processor according to an embodiment of the disclosure, FIG. 10 is a perspective view showing a state that the inner filter and the outer filter are being assembled in the food processor according to an embodiment of the disclosure, and FIG. 11 is a longitudinal-section view showing an assembled state of the inner filter and the outer filter in the food processor according to an embodiment of the disclosure.

The juice-extraction filter 60 of the food processor 1 according to an embodiment includes an inner filter 61 and an outer filter 62.

As shown in FIG. 8, the inner filter 61 is approximately shaped like a cylinder and includes a first rim 61a and a second rim 61b at opposite ends thereof, and a lateral portion 61d connecting the first rim 61a and the second rim 61b is formed with a plurality of slits 61c.

The inner filter 61 is mounted surrounding the tip end of the screw 50.

As the screw 50 rotates, a food ingredient crushed in the container 10 by the base end side of the screw 50 moves to the tip end side along the crushing blades 51 of the screw 50 and enters between the tip end side of the screw 50 and the inner filter 61.

The food ingredient introduced between the inner filter 61 and the screw 50 is moved toward the tip end as the screw 50 rotates, and further crushed and pressed between the inner filter 61 and the screw 50.

The first rim 61a is positioned inside the coupling end 12 of the container 10, and the second rim 61b accommodates the tip end projection 53 of the screw 50, in which the first rim 61a is formed to have a larger diameter than the second rim 61b so that the crushed food ingredient can be easily introduced from the container 10 into the inner filter 61, and the second rim 61b is formed to have a smaller diameter than the first rim 61a so that the food ingredient can be efficiently juiced moving toward the tip end of the screw 50.

As shown in FIG. 8, the plurality of slits 61c is extended from the second rim 61b toward the first rim 61a, and therefore the shape of the lateral portion 61d is partially discontinued by the slits 61c.

Further, the lateral portion 61d may include a plurality of crushing pieces 61e protruding from the inner surface thereof. The crushing pieces 61e crush a food ingredient pressed against the inner surface of the inner filter 61 by the screw 50, thereby improving an efficiency of crushing the food ingredient.

Further, as shown in FIG. 8, at least some among the crushing pieces 61e may be formed to be adjacent to first sides of the slits 61c. The crushing pieces 61e may be formed so that the slit 61c can be positioned after the crushing piece 61e along the rotating direction of the screw 50. After coupling with the outer filter 62 (to be described later), the slit 61c forms a path along which juice extracted from a food ingredient is discharged. As the crushing piece 61e is positioned before the slit 61c, the crushing piece 61e serves as a blocking projection for preventing residues remaining after extracting juice from a food ingredient from being discharged through the slit 61c.

As shown in FIG. 8, the inner filter 61 may include a discharge-preventing piece 61f extended from the first rim 61a. The discharge-preventing piece 61f is positioned above the juice outlet 15 (see FIG. 12), thereby preventing food ingredient byproducts (e.g., juice, residues, food ingredient pieces, etc.), which are produced while the food ingredient is crushed in the container, from falling down to the juice outlet

A space surrounded by the second rim 61b serves as a first residue outlet 61g (see FIG. 10). In other words, residues remaining after a food ingredient is juiced between the screw 50 and the inner filter 61 are moved toward the tip end of the screw 50 and discharged through the first residue outlet 61g as the screw 50 rotates.

As shown in FIG. 9, the outer filter 62 is approximately shaped like a cylinder and includes a first rim 62a and a second rim 62c at opposite ends thereof, and a plurality of plugs 62d are formed to connect the first rim 62a and the second rim 62c. Between the first rim 62a and the second rim 62c, a reinforcing rim 62b may be formed to externally support the plurality of plugs 62d.

The outer filter 62 is detachably coupled to the inner filter 61 while surrounding the inner filter 61.

As shown in FIG. 10, the plurality of plugs 62d of the outer filter 62 are inserted one to one in the plurality of slits 61c of the inner filter 61 while the outer filter 62 and the inner filter 61 are coupled. Further, portions, which have a discontinued shape due to the slits 61c, in the lateral portion 61d of the inner filter 61 are respectively inserted in the spaces between the plugs 62d of the outer filter 62.

As shown in FIG. 11, a micro-gap is formed between the slit 61c and the plug 62d in a state that the outer filter 62 and the inner filter 61 are completely coupled, and juice extracted from a food ingredient between the inner filter 61 and the screw 50 is discharged to the outside of the juice-extraction filter 60 through the micro-gap. On the other hand, residues produced while juicing the food ingredient are not discharged through the micro-gap, but moved toward the tip end of the screw 50 and discharged through a first residue outlet 61g as the screw 50 rotates.

The reinforcing rim 62b prevents the micro-gap from widening by pressure applied to the plugs 62d while the food ingredient is juiced.

In the food processor 1 according to an embodiment, the inner filter 61 and the outer filter 62 are easily separable, and juice is discharged through the micro-gap, which is formed in the state that the inner filter 61 and the outer filter 62 are coupled, so that the juice can be prevented from mixing with residues. In the state that the inner filter 61 and the outer filter 62 are separated, a space between the slit 61c of the inner filter 61 and the plug 62d of the outer filter 62 is larger than the micro-gap, thereby facilitating cleaning.

FIG. 12 is a cut-open view of the food processor of FIG. 1.

As shown in FIGS. 2 and 12, the juice-discharging preventor 70 is detachably coupled to the outer surface of the second rim 62c of the outer filter 62, and includes an elastic transforming portion 71 formed with a tip-end projection accommodating hole 72 at the center thereof to accommodate the tip end of the screw 50 projection 53.

As shown in FIG. 12, the juice-discharging preventor 70 is installed with the elastic transforming portion 71 being in close contact with the outer surface of the tip end projection 53, and prevents juice from being discharged between the first residue outlet 61g and the tip end projection 53.

However, the elastic transforming portion 71 is elastically transformable based on extrusion force applied to the residues as the screw 50 rotates, so that the residues produced by juicing the food ingredient in the inner filter 61 can be discharged between the first residue outlet 61g and the tip end projection 53. Therefore, the residues of the food ingredient, which are produced in the inner filter 61, are discharged between the elastic transforming portion 71 and the tip end projection 53 while transforming the elastic transforming portion 71.

Meanwhile, as shown in FIG. 12, the filter cover 80 is detachably coupled to the coupling end 12 of the container 10 while accommodating the juice-extraction filter 60 and the juice-discharging preventor 70 at the tip end side of the screw 50.

The filter cover 80 includes a first end 81 having a fastening structure detachably coupled to the coupling end 12 of the container 10, and a second end 82 having a second residue outlet 83 communicating with the first residue outlet 61g while accommodating the tip end projection 53 of the screw 50 so that the residue discharged through the first residue outlet 61g can be discharged to the outside of the filter cover 80.

A lateral portion connecting the first end 81 and the second end 82 of the filter cover 80 functions as a channel for guiding juice discharged from the juice-extraction filter 60 to the juice outlet 15. As shown in FIG. 12, the lateral portion of the filter cover 80 forms a downward inclined surface facing toward the juice outlet 15 so that the juice discharged from the juice-extraction filter 60 can smoothly flow toward the juice outlet 15.

It will be understood by a person having ordinary knowledge in the art to which the disclosure pertains that the disclosure may be embodied in other specific forms without changing the technical spirit or essential features. Therefore, it should be understood that the foregoing embodiments are for illustrative purposes only and not restricted in all aspects. The scope of the disclosure is defined by the following claims rather than the foregoing detailed description, and all changes or modifications from the meaning and scope of the claims and their equivalents should be construed as being included in the scope of the disclosure.

## Claims

1. 2. A food processor comprising:
a screw formed with a crushing blade;
a container in which a base end side of the screw is rotatably accommodated; and
an ingredient guider extended upward from the container, and comprising an ingredient inlet on a top thereof to feed a food ingredient, so that the food ingredient fed through the ingredient inlet can be guided into the container,
wherein the ingredient guider is eccentrically disposed with respect to the container, and comprises a first side being in contact with an upper side of the container and a second side being in contact with a lateral portion and a lower side of the container, and
the second side of the ingredient guider comprises a bottom side of an inner surface thereof biased toward a tip end side of the screw.

2. The food processor of claim 1, wherein the inner surface of the second side of the ingredient guider comprises an outer line formed by connecting outermost points of horizontal planes, and the outer line comprises an upper line extended vertically downward, and a lower line inclined with regard to the upper line from a lower portion of the upper line toward a tip end of the screw.

3. The food processor of claim 2, wherein an edge line forming a boundary between the container and the inner surface of the second side of the ingredient guider comprises a first edge line adjacent to the tip end of the screw with respect to the lower line, and a second edge line adjacent to the base end of the screw with respect to the lower line, and the first edge line is more steeply inclined with regard to a rotary shaft of the screw than the second edge line.

4. The food processor of claim 1, wherein the first side of the ingredient guider is extended upward at a position spaced apart from a center of the container in a direction of the first side.

5. The food processor of claim 1, wherein the container comprises at least one crusher protruding or recessed on an inner wall thereof.

6. The food processor of claim 5, wherein at least some crushers comprise a projection protruding against a rotating direction of the screw.

7. The food processor of claim 1, wherein the screw comprises an ingredient accommodating groove at a first side thereof, in which a food ingredient entering the container through the ingredient guide is at least partially accommodated.

8. The food processor of claim 1, further comprising:
a filter cover rotatably accommodating the tip end side of the screw and detachably coupled to the container; and
a juice-extraction filter provided between the filter cover and the screw.

9. The food processor of claim 8, wherein the juice-extraction filter comprises:
an inner filter provided to surround the tip end side of the screw and comprising a plurality of slits; and
an outer filter detachably coupled to the inner filter to surround the inner filter, and comprising a plurality of plugs accommodated in the plurality of slits and forming a micro-gap together with the plurality of slits while coupling with the inner filter, and
juice extracted from a food ingredient pressed between the tip end side of the screw and the inner filter is discharged between the outer filter and the filter cover through the micro-gap.

10. The food processor of claim 9, wherein
a bottom surface of the container is formed with a juice outlet through which juice discharged between the outer filter and the filter cover is drained, and
the filter cover comprises a downward surface inclined toward the container so that juice can flow toward the juice outlet.

11. The food processor of claim 10, further comprising a discharge-preventing piece provided above the juice outlet so that a food ingredient put into the container or a food ingredient byproduct produced while extracting juice from the food ingredient can be prevented from being directly discharged through the juice outlet without passing through the juice-extraction filter.

12. The food processor of claim 11, wherein the discharge-preventing piece is extended from a first side of the inner filter.

13. The food processor of claim 9, wherein
the inner filter comprises a first residue outlet through which residues remaining after extracting juice from a food ingredient between the tip end side of the screw and the inner filter are discharged, and
the residue remaining after extracting the juice from the food ingredient is discharged between the first residue outlet and the tip end of the screw.

14. The food processor of claim 13, further comprising a juice-discharging preventor interposed between the first residue outlet and the tip end of the screw and preventing juice extracted from the food ingredient from being discharged through the first residue outlet,
wherein the juice-discharging preventor is elastically transformable in a portion thereof adjacent to the tip end of the screw, so that residues remaining after extracting juice from the food ingredient can be discharged while elastically transforming the portion adjacent to the tip end of the screw by extrusion force based on the rotation of the screw.

15. The food processor of claim 14, wherein
the filter cover comprises a second residue outlet communicating with the first residue outlet, and
the juice-discharging preventor is positioned between the first residue outlet and the second residue outlet.
